# EUROPÄISCHE PATENTSCHRIFT

(11) **EP 2 314 470 B1**
(45) Veröffentlichungstag und Bekanntmachung des Hinweises auf die Patenterteilung: **23.04.2014**
(21) Anmeldenummer: 10188367.6
(22) Anmeldetag: 21.10.2010
(51) Int. Cl.: B60H 1/00, B60H 1/34

(54) **Luftleitvorrichtung mit Luftausströmerdüse**
Air directing device with air outlet flow nozzle
Dispositif de guidage d'air avec buse d'évacuateur d'air

(30) Priorität: 22.10.2009 DE 102009050377
(43) Veröffentlichungstag der Anmeldung: 27.04.2011
(73) Patentinhaber: Behr GmbH & Co. KG, 70469 Stuttgart (DE)
(72) Erfinder: Burr, Reinhold, 89518, Heidenheim (DE); Fritsche, Uwe, 71686, Remseck am Neckar (DE); Fieger, Martin, 71636, Ludwigsburg (DE); Röhm, Klaus, 70736, Fellbach (DE); Zeller, Kuno, 70469, Stuttgart (DE)
(74) Vertreter: Grauel, Andreas

(56) Entgegenhaltungen:
- WO-A1-2005/021301
- DE-A1-102004 038 016
- DE-A1-102008 004 189
- DE-U1-202006 006 597

## Beschreibung

Die Erfindung betrifft eine Luftleitvorrichtung für ein Kraftfahrzeug, die zumindest einen Luftleitbereich aufweist, der zumindest zwei Luftleitkanäle aufweist, die zumindest bereichsweise fluidisch voneinander getrennt sind. Weiterhin betrifft die Erfindung eine lufttechnische Einrichtung, insbesondere eine lufltechnische Einrichtung für ein Kraftfahrzeug. Darüber hinaus betrifft die Erfindung ein Kraftfahrzeug.

Bei der Belüftung von geschlossenen Räumen, wie beispielsweise bei der Belüftung von Kraftfahrzeuginnenräumen, ist es üblich, dass die von außen angesaugte Frischlufl zunächst aufgearbeitet wird (beispielsweise erwärmt wird, abgekühlt wird und/oder durch einen Filter geleitet wird), bevor die derart aufgearbeitete Luft in den geschlossenen Raum (beispielsweise in den Kraftfahrzeuginnenraum) geleitet wird.

Insbesondere im Bereich von Kraftfahrzeugen ist es für das Komfortempfinden der Kraftfahrzeuginsassen oftmals maßgeblich, auf welche Weise die aufgearbeitete Luft in den Kraftfahrzeuginnenraum freigesetzt wird. Beispielsweise hat es sich erwiesen, dass Luft, die im Fußbereich der Frontpassagiere bzw. im Bereich der Windschutzscheibe freigesetzt wird, für ein hohes Komfortempftnden der Fahrzeuginsassen möglichst diffus freigesetzt werden sollte. Demgegenüber bevorzugen viele Frontpassagiere, dass sie im Kopf- bzw. Brustbereich mit einem gerichteten Luftstrahl "angeblasen" werden (eine sogenannte "Spot"-Belüftungscharakteristik). Gerade im Kopf- bzw. im Brustbereich gibt es jedoch auch einen erheblichen Anteil an Personen, die es bevorzugen, auch in diesem Bereich mit einer diffusen Luftströmung versorgt zu werden. Schließlich tritt auch der Effekt auf, dass manche Personen (beispielsweise in Abhängigkeit von äußeren Einflüssen, wie beispielsweise der Umgebungstemperatur, der Sonneneinstrahlung usw.) zeitweise einen gerichteten Luftstrahl, zeitweise jedoch auch einen diffusen Luftstrahl im Kopf- bzw. Brustbereich bevorzugen.

Um derartig unterschiedlichen Komfortwünschen der Fahrzeuginsassen genügen zu können wurden bereits Luftauslassdüsen vorgeschlagen, die in der Lage sind sowohl eine gerichtete Luftströmung ("Spot"-Luftströmung), als auch eine diffuse Luftströmung freizusetzen. Eine derartige Luftauslassdüse ist beispielsweise in der Deutschen Offenfegungsschrift DE 10 2004 038 016 A1 beschrieben. Bislang wurden derartige Luftauslassdüsen, die sowohl eine gerichtete Luftströmung, als auch eine diffuse Luftströmung freisetzen können, ausschließlich mit Luftleitkanälen ausgebildet, die einen kreisrunden Querschnitt aufweisen. Ein derartiger kreisrunder Querschnitt wurde nämlich bislang als unabdingbar angesehen, um einen hohen Luftdurchsatz, niedrige Betriebsgeräusche (zum Beispiel durch Vermeidung von unnötigen Engpässen für die die Luftausströmerdüse durchströmende Luft) und ein möglichst hohes Komfortempfinden für die Kraftfahrzeugpassagiere realisieren zu können. Teilweise wurden auch - wie beispielsweise durch die bereits genannte DE 10 2004 038 016 A1 - Lufiauslassdüsen bekannt, welche eine Mehrzahl (wie beispielsweise zwei) Teilkanäle aufweisen, wobei die einzelnen Teilkanäle jeweils mit einem kreisrunden Querschnitt ausgebildet sind.

Die DE 10 2008 004 189 zeigt eine Luftleitvorrichtung gemäß Oberbegriff des Anspruchs 1.

Als besonders problematisch bei den bisherigen Luftaustassdüsen, die sowohl eine gerichtete Luftströmung, als auch eine diffuse Luftströmung freisetzen können, hat es sich erwiesen, dass diese in aller Regel nicht optimal an bestehende Bauraumvorgaben angepasst werden können. Dies führt in aller Regel dazu, dass Bauraum, der eigentlich für die Luftauslassdüse zur Verfügung stünde, nicht, bzw. nicht optimal für eine Luftdurchströmung genutzt wird. Dadurch sinkt die Luftauslassleistung der betreffenden Luftauslassdüse. Um dies zu kompensieren ist es bislang erforderlich, die Gebläseleistung zu erhöhen, was zu erhöhten Betriebsgeräuschen sowie zu einem erhöhten Energieverbrauch führen kann. Eine optimale Ausnutzung eines vorliegenden Bauraums ist bislang in aller Regel nur dann möglich, wenn der zur Verfügung stehende Bauraum zufälligerweise (im Wesentlichen) einen kreisrunden Querschnitt aufweist.

Es besteht somit ein Bedard an verbesserten Luftauslassdüsen, die sowohl eine gerichtete, als auch eine diffuse Luftströmung erzeugen können.

Die Aufgabe der Erfindung ist es daher, eine Luftleitvorrichtung vorzuschlagen, welche gegenüber bekannten Luftleitvorrichtungen verbessert ist. Diese Aufgabe wird durch eine Luftleitvorrichtung nach Anspruch 1 gelöst.

Dazu wird vorgeschlagen, eine Luftleitvorrichtung, insbesondere eine Luftleitvorrichtung für ein Kraftfahrzeug, die zumindest einen Luftleitbereich aufweist, der zumindest zwei Luftkanäle aufweist, die zumindest bereichsweise fluidisch voneinander getrennt sind, derart auszubilden, dass zumindest ein Luftleitbereich und/oder zumindest ein Luftleitkanal zumindest bereichsweise eine nicht-runde Querschnittsform aufweist. Mit der vorgeschlagenen nicht-runden Querschnittsform ist es auf verblüffend einfache Weise möglich, die Luftleitvorrichtung, bzw. Teile davon, in aller Regel erheblich besser an bestimmte, beispielsweise von einem Kraftfahrzeughersteller vorgegebene Bauraumvorgaben anpassen zu können. Dadurch ist es möglich, den Bauraum besser auszunutzen, um dadurch beispielsweise die Luftdurchsatzleistung der Luftleitvorrichtung zu erhöhen, Betriebsgeräusche zu verringern, die Gebläseleistung zu verringern, bzw. das Komfortempfinden der Fahrzeuginsassen zu erhöhen. Zu ihrer eigenen Verblüffung haben die Erfinder feststellen können, dass der nicht-runde Aufbau der Luftleitvorrichtung zwar zu gewissen Nachteilen, wie insbesondere gewissen lokalen Erhöhungen der Betriebsgeräusche führen kann, diese Nachteile aber durch die Vorteile, wie insbesondere durch Effizienzgewinne und damit eine einher gehende Verringerung der Betriebsgeräusche, bei weitem überkompensiert werden können. Die nicht-runde Querschnittsform ist insbesondere deshalb von Vorteil, weil in aller Regel eine nicht-runde Einbausituation vorliegt. In aller Regel werden die zumindest zwei Luftleitkanäle dahingehend verwendet, dass ein erster Luftleitkanal (bzw. eine erste Gruppe von Luftleitkanälen) eine diffuse Luftströmung erzeugt, bzw. der Erzeugung einer diffusen Luftströmung dient. Demgegenüber dient ein zweiter Luftleitkanal (bzw. eine zweite Gruppe von Luftleitkanälen) in der Regel dazu, eine gerichtete Luftströmung ("Spot"-Luftausströmcharakteristik) zu erzeugen. In aller Regel bildet ein Paar aus unterschiedlichen Luftleitkanälen (bzw. eine Mehrzahl von unterschiedlichen Luftleitkanälen) einen Luftleitbereich, mit dessen Hilfe die Luftleitvorrichtung sowie eine diffuse, als auch eine gerichtete Luftströmung bereit stellen kann.

Die nicht-runde Querschnittsform wird zumindest in einem in Luftströmungsrichtung gesehen mittleren und/oder hinteren Teil zumindest eines Luftleitbereichs und/oder zumindest eines Luftleitkanals vorgesehen wird. Die nicht-runde Querschnittsform ist in einem hinteren Teil der Luftkanäle vorgesehen. Bei einem derartigen Aufbau der Luftleitvorrichtung ist der entsprechend ausgebildete Bereich des Luftleitbereichs bzw. des Luftleitkanals geometrisch insbesondere in der Nähe des Ortes gelegen, an dem die gerichtete bzw. die diffuse Luftströmung schlussendlich in den Kraftfahrzeuginnenraum freigegeben wird. Dadurch können die entsprechenden Bereiche die systemimmanenten Eigenschaften des vorgeschlagenen Aufbaus in besonderem Maße zur Geltung bringen. Es ist jedoch durchaus möglich, dass sich eine vorteilhafte Ausbildung der Luftleitvorrichtung auch dann ergeben kann, wenn die nicht-runde Querschnittsform zusätzlich oder alternativ auch in anderen, insbesondere vorderen Bereichen vorgesehen wird.

Erfindungsgemäß sind bei der Luftleitvorrichtung zumindest zwei Luftleitkanäle zumindest bereichsweise im Wesentlichen koaxial zueinander ausgebildet sind. Mit einem derartigen Aufbau kann in aller Regel eine besonders hohe Effizienz der Luftleitvorrichtung realisiert werden. Zusätzlich oder alternativ ist es jedoch auch möglich, dass zumindest zwei Luftleitkanäle zumindest bereichsweise auf andere Weise angeordnet werden, wie beispielsweise exzentrisch zueinander versetzt (wobei es möglich ist, dass die exzentrische Versetzung im Wesentlichen vollständig bzw. nur teilweise erfolgt). Insbesondere kann es sich bei den zumindest zwei Luftleitkanälen, die geeignet zueinander angeordnet sind, um Luftleitkanäle handeln, die gemeinsam einen (gemeinsamen) Luftleitbereich bilden,

Eine weitere, besonders bevorzuge Ausführungsform der Luftleitvorrichtung kann sich ergeben, wen zumindest ein Luftleitbereich und/oder zumindest ein Luftleitkanal zumindest bereichsweise eine elongierte Querschnittsform aufweist. Unter einer elongierten Querschnittsform ist insbesondere zu verstehen, dass die Querschnittsform in der (zumindest) ersten Richtung eine größere Ausdehnung (insbesondere in radialer Richtung) aufweist, als dies in (zumindest) einer zweiten (insbesondere radialen) Richtung der Fall ist. Die beiden Richtungen können dabei im Wesentlichen um 90° zueinander versetzt sein. Möglich ist es jedoch auch, das sie um einen anderen Betrag zueinander versetzt sind, wie beispielsweise um 30° 45° 60°. Insbesondere ist es auch möglich, dass die Querschnittsform ein Höhen-zu-Breiten-Verhältnis aufweist, weiches einem Intervall entnommen ist, dessen Obergrenze bzw. dessen Untergrenze 0,3, 0,4, 0,5, 0,6, 0,7, 0,8, 0,9 oder 1,0 ist. Die Ebene der ausgezeichneten Richtung (bzw. die ausgezeichneten Richtungen) der elongierten Querschnittsform kann dabei in axialer Richtung gesehen zumindest bereichsweise in mit zumindest im Wesentlichen unveränderter Richtung angeordnet sein. Ebenso ist es auch möglich, dass sich die Ebene der ausgezeichneten Richtung(en) in Axialrichtung verändert. Beispielsweise sind Winkelveränderungen von zumindest im Wesentlichem 0° bis 45 °, 50°, 80°, 90°, 100°, 135°, 180°, 270° oder 360° möglich.

Erfindungsgemäß weisen bei der Luftleitvorrichtung beide radial außen liegenden Luftkanäle eine ovalartige, ellipsenartige, stadionartige Querschnittsform auf. Insbesondere ist es auch möglich, dass insbesondere bei einer rechteckförmigen Querschnittsform die Ecken abgerundet ausgebildet werden können. Die vorgeschlagenen Querschnittsformen haben sich in ersten Versuchen als besonders vorteilhaft erwiesen. Insbesondere ist es dank abgerundeter Ecken in der Regel möglich, die entstehenden Luftgeräusche besonders niedrig halten zu können.

Weiterhin kann es sich als besonders vorteilhaft erweisen, wenn die Luftleitvorrichtung eine Mehrzahl von Luftleitbereichen, insbesondere zwei, drei oder vier Luftleitbereiche aufweist. Es ist zwar grundsätzlich möglich, einen im Wesentlichen beliebig geformten Bauraum auch mit einem einzelnen Luftleitbereich durch eine entsprechende Formgebung des Luftleitbereichs auszufüllen. Es hat sich jedoch gezeigt, dass es insbesondere bei beispielsweise besonders langgestreckten Bauräumen von Vorteil sein kann, eine Mehrzahl von Luftleitbereichen vorzusehen, die dann jeweils eine Formgebung aufweisen können, die weniger stark von einer runden Formgebung abweicht. Dies kann sich aus fertigungstechnischen Gründen als vorteilhaft erweisen. Darüber hinaus können auf diese Weise auch Betriebsgeräusche der Luftleitvorrichtung verringert werden. Selbstverständlich ist es auch möglich, dass bei mehreren Luftleitbereichen ein Teil der Luftleitbereiche mit einem runden Querschnitt ausgebildet wird, und nur ein einzelner, bzw. nur ein Teil der Luftleitbereiche mit einem nicht-runden Querschnitt ausgebildet wird.

Erfindungsgemäß ist es, wenn bei der Luftleitvorrichtung zumindest ein Luftleitkanal derart ausgebildet und eingerichtet ist, dass dieser eine diffuse Luftströmung erzeugt und/oder freigibt. Auf diese Weise ist es möglich, dass mit der Luftleitvorrichtung beziehungsweise der unter Verwendung der Luftleitvorrichtung ausgebildeten lufttechnischen Einrichtung eine diffuse Luftausströmcharakteristik realisiert werden kann. Erfindungsgemäß ist der radial äußerer Luftleitkanal derart ausgebildet und eingerichtet, dass dieser eine diffuse Luftströmung erzeugt und/oder freigibt. Es hat sich gezeigt, dass gerade eine radial äußere Anordnung (beispielsweise eine Anordnung in Form eines Art kreisförmigen Rings, welcher beispielsweise um einen innenliegenden Luftleitkanal herum angeordnet ist), insbesondere für diffuse Luftströmungen geeignet ist. Eine diffuse Luftströmung kann insbesondere durch eine Art wendelförmige Ausbildung des Luftleitkanals realisiert werden.

Vorteilhaft ist es weiterhin, wenn bei der Luftleitvorrichtung zumindest ein Luftleitkanal vorgesehen ist, der derart ausgebildet und eingerichtet ist, dass dieser eine gerichtete Luftströmung erzeugt und/oder freigibt. Mit Hilfe einer derartigen Ausbildung kann die Luftleitvorrichtung bzw. die unter Verwendung der Luftleitvorrichtung ausgebildete lufttechnische Einrichtung eine derartige "spot"-artige Luftströmung erzeugen. Bevorzugt ist zumindest ein radial innerer Luftleitkanal derart ausgebildet und eingerichtet, dass dieser eine gerichtete Luftströmung erzeugt und/oder freigibt. Gerade durch eine radial innenliegende Anordnung des Luftleitkanals kann eine weitgehend punktförmige Luftströmung erzeugt werden, was in vielen Fällen für eine gerichtete Luftströmung erwünscht ist.

Weiterhin ist es vorteilhaft, wenn die Luftleitvorrichtung zumindest eine Luftbeeinflussungseinrichtung aufweist. Insbesondere kann es sich bei der Luftbeeinflussungsvorrichtung um eine Luftdurchsatzbeeinflussungseinrichtung handeln. Mit Hilfe einer Luftdurchsatzbeeinflussungseinrichtung ist es möglich, dass die Luft beispielsweise wechselweise durch einen ersten sowie durch einen zweiten Luftleitkanal hindurch geführt werden kann, Auf diese Weise ist es möglich, dass mit Hilfe der Luftleitvorrichtung wechselweise eine diffuse Luftströmung bzw. eine gerichtete Luftströmung erzeugt wird. Selbstverständlich ist es auch möglich, Zwischenstellungen zu realisieren. Auch anderweitige Luftbeeinflussungseinrichtungen können realisiert werden, wie beispielsweise Luftbeeinflussungseinrichtungen, welche die Richtung einer erzeugten Luftströmung beeinflussen. Hierzu können beispielsweise an sich bekannte Lamellengitter verwendet werden.

Bevorzugt ist es Weiterhin, wenn die Luftleitvorrichtung zumindest eine Luftauslassvorrichtung aufweist und/oder zumindest bereichsweise als Luftauslassvorrichtung ausgebildet ist, Insbesondere kann die Luftleitvorrichtung derart ausgebildet sein, dass die Luftleitvorrichtung zumindest eine Luftauslassdüse aufweist und/oder zumindest bereichsweise als Luftauslassdüse ausgebildet ist. Eine derartig ausgebildete Luftauslassdüse ist besonders geeignet zur Freisetzung von unterschiedlichen Luftströmungen in den Innenraum eines Kraftfahrzeugs bzw. sonstiger geschlossener Räume.

Weiterhin ist es bevorzugt, wenn die Luftleitvorrichtung insbesondere zumindest ein Luftleitbereich und/oder zumindest ein Luftleitkanal und/oder zumindest eine Luftauslassvorrichtung und/oder zumindest eine Luftauslassdüse auf die Einbausituation angepasst ist. In einem derartigen Fall kann der zur Verfügung stehende Bauraum weitgehend optimal genutzt werden. Dadurch wird kein Bauraum unnötigerweise "verschenkt".

Weiterhin wird eine lufttechnische Einrichtung, insbesondere eine lufttechnische Einrichtung für ein Kraftfahrzeug, vorgeschlagen, die zumindest eine Lufileitvorrichtung mit dem oben beschriebenen Aufbau aufweist. Bei der lufttechnischen Einrichtung kann es sich beispielsweise um eine luftaufarbeitende Anlage, wie beispielsweise eine Klimaanlage, ein sogenanntes Thermostrukturmodul, eine Armaturenbrettanordnung (insbesondere darin aufgenommenen Luftausströmerdüsen und/oder Luftausströmungsöffnungen) und dergleichen handeln, Die lufttechnische Einrichtung weist dann die bereits vorab beschriebenen Eigenschaften und Vorteile in analoger Weise auf.

Weiterhin wird ein Kraftfahrzeug vorgeschlagen, welches zumindest eine Luftleitvorrichtung mit dem oben beschriebenen Aufbau und/oder zumindest eine lufttechnische Einrichtung mit dem oben beschriebenen Aufbau aufweist. Auch das Kraftfahrzeug weist dann die bereits vorab beschriebenen Eigenschaften und Vorteile in analoger Weise auf.

Im Folgenden wird die Erfindung anhand vorteilhafter Ausführungsbeispiefe und unter Bezugnahme auf die beigefügte Zeichnung näher erläutert. Es zeigen:
- Fig. 1:: ein erstes Ausführungsbeispiel eines Luftauslasselements in schematischem Querschnitt von oben;
- Fig. 2:: das in Fig. 1 gezeigt Luftauslasselement in schematischer Draufsicht von vorne;
- Fig. 3:: ein zweites mögliches Beispiel eines Luftauslasselements in schematischer Draufsicht von vorne.

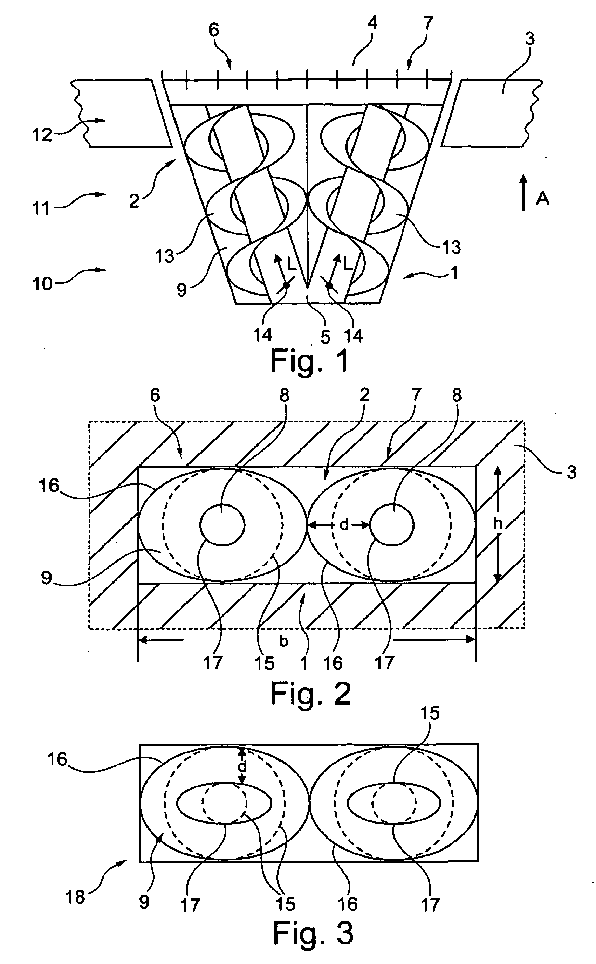

In den Fig. 1 und 2 ist ein erstes Ausführungsbeispiel eines Luftauslasselements 1 in schematischem Querschnitt von oben bzw. in schematischer Draufsicht von vorne dargestellt. Das Luftauslasselement 1 kann beispielsin einen Aufnahmebereich 2 eingebaut werden, weicher in Form eines Ausschnitts im Armaturenbrett 3 Kraftfahrzeugs vorgesehen ist. Die Größe des zur Verfügung stehenden Aufnahmebereichs 2 kann dabei in aller nicht beliebig gewählt werden, sondern ist üblicherweise zumindest zum Teil durch die Anordnung zusätzlicher Bedienungselemente und sonstiger technischer Einrichtungen bedingt. Bei heutigen Kraftfahrzeugen ist darüber hinaus der für eine Einzelkomponente zur Verfügung stehende Bauraum aufgrund der zwischenzeitlich großen Anzahl unterschiedlicher Komponenten nach oben hin sehr beschränkt. Das Luftauslasselement 3 kann beispielsweise - wie in Fig. 1 - hinter einem Lamellengitter 4 angeordnet werden (wobei in Luftströmungsrichtung L gesehen das Lamellengatter 4 hinter dem Luftauslasselement 1 angeordnet ist). Mit Hilfe des Lamellengitters 4 kann die Richtung der aus dem Luftauselement 1 ausströmenden Luftströmung L vom Kraftfahrzeuginsassen geeignet verstellt werden.

Die Luftströmung L wird beispielsweise von einer Kraftfahrzeugklimaanlage zur Verfügung gestellt, und über einen Eintrittsluftkanal- 5. Luftauslasselements 1 diesem zugeführt wird. Hier wird die Luftströmung L in insgesamt vier Teilströme zerlegt. Das Lufiauslasselement 1 besteht aus jeweils zwei Luftleitbereichen 6, 7, die im vorliegend dargestellten Ausführungsbeispiel nebeneinander liegend angeordnet sind (in Fig. 1 und 2 links (6) und rechts (7)). Jeder der beiden Luftleitbereiche 6, 7 weist jeweils einen innenliegenden, im Wesentlichen zylindrisch geformten inneren Luftkanal 8, sowie einen ringförmig ausgebildeten äußeren Luftkanal 9 auf, Die Formgebung der Luftleitkanäle 8, 9 der beiden Luftleitbereiche 6, 7 ist dabei in einer Axialrichtung A gesehen in einem (in Luftsströmungsrichtung L gesehen) mittleren 1 und hinteren Bereich 12 im Wesentlichen konstant. Lediglich in einem vorderen Bereich 10, der einen Übergangsbereich zwischen dem von der Klimaanlage kommenden Eintrittslufikanal 5 und den Luftkanälen 8, 9 der beiden Luhleitbereiche 6, 7 bildet, ändert sich die Formgebung geeignet.

Die inneren 8 und die äußeren 9 Luftkanäle der beiden Lufileitbereiche 6, 7 sind jeweils zueinander koaxial angeordnet (zumindest im mittlerer 11 und hinteren Bereich 12). Wie man insbesondere Fig. 1 gurt entnehmen kann, dienen die inneren Luftkanäle 8 jeweils der Bereitstellung einer gerichteten Luftströmung (sogenannte "Spot"-Luftauslasscharakteristik), während die äußeren Luftkanäle 9 jeweils der Bereitstellung einer diffusen Luftströmung dienen. Damit die äußeren Luftkanäle 9 eine diffuse Luftströmung bereit stellen können, ist in diesen jeweils eine wendelförmige Trennwand 13 vorgesehen. Diese erzeugt einen "Drall" des betreffenden Teils der Luftströmung L. Darüber hinaus wird der entsprechende Anteil der Luftströmung L durch die wendelförmigen Trennwände 13 verlangsamt. Um die über den Eintrittsluftkanai 5 heran geführte Luft mengenmäßig geeignet zwischen den inneren Luftkanälen 8 und den äußeren Luftkanälen 9 aufteilen zu können sind geeignet ausgebildete Luftleitklappen 14 (vorliegend nur schematisch dargesvorgesehen, die beispielsweise unter Verwendung elektrischer Aktuatoren verstellt werden können.

Im vorliegend dargestellten Ausführungsbeispiel eines Luftauslasselements 1 (entsprechend dem in Fig. 1 und 2 dargestellten Ausführungsbeispiel) ist der im Armaturenbrett 3 vorgesehene Aufnahmebereich 2 (und damit der zur Verfügung stehende Bauraum) in Form eines Rechtecks mit einer bestimmten Höhe h und einer bestimmten Breite b vorgegeben. Diese Abmessungen b, h stimmen dabei typischerweise nicht mit Abmessungen überein, die für das Luftauslasselement 1 ein Optimum darstellen. Wenn daher beim vorliegend dargestellten 1 der Auslassquerschnitt der Luftkanäle 9 kreisförmig ausgebildet wäre (in Fig. 2 durch eine kreisförmige Hilfslinie 15 dargestellt) so würde der zur Verfügung stehende Aufnahmebereich 2 nicht optimal genutzt werden. Daher wird vorliegend vorgeschlagen, die Außenkontur 16 der äußeren Luftkanäle 9 jeweils auszubilden. Wie Fig. 2 entnehmen kann, wird hierdurch der im Armaturenbrett 3 zur Verfügung stehende Aufnahmebereich 2 deutlich besser für den Durchtritt einer Luftströmung L genutzt.

Im in Fig. 2 dargestellten Ausführungsbeispiel weisen die Begrenzungskonturen 17 der inneren Luftkanäle 8 jeweils einen kreisförmigen Aufbau auf. Es hat sich gezeigt, dass ein derartiger kreisförmiger Aufbau für den Spot-Luftbetrieb besonders geeignet ist. Die Nachteile, die durch die variable Dicke d des ringförmigen äußeren Luftkanals 9 in strömungstechnischer Hinsicht entstehen (zunehmender und abnehmender Luftwiderstand) sind entgegen der bisherigen Versteifung nur relativ klein. Insbesondere können die entstehenden Nachteile durch die insgesamt größere Luftdurchtrittsfläche in aller Regel deutlich überkompensiert werden.

Selbstverständlich ist es gemäß einem zweiten Ausführungsbeispiel eines Luftauslasselements 18 auch möglich, nicht nur die Außenkontur 16 des äußeren Luftkanals 9, sondern ebenso die Begrenzungskonturen 17 des inneren Luftkanals 8 ovalartig auszubilden. Dies ist in Fig. 3 dargestellt, die eine Draufsicht auf ein entsprechend ausgebildetes Luftauslasselement 18 zeigt. Zur Verdeutlichung der Formgebung der Außenkonturen 16 und der Begrenzungskonturen 17 der äußeren Luftkanäle 9 bzw. der inneren Luftkanäle 8, sind auch in Fig. 3 kreisförmige Konturen in Form von gestrichelt eingezeichneten Hilfslinien 15 eingefügt. Die "doppelte" ovale Ausführung sowohl der Außenkonturen 16, als auch der Begrenzungskonturen 17 verkleinert (oder beseitigt) die Variation der Dicke d des äußeren Luftkanals 9, was sich in strömungstechnischer Hinsicht als vorteilhaft erweisen kann. Insbesondere ist es möglich, dass durch eine derartige Ausführung Betriebsgeräusche nochmals verringert werden können.

### Bezugszeichenliste

- 1.: Luftauslasselement
- 2.: Aufnahmebereich
- 3.: Armaturenbrett
- 4.: Lamellengitter
- 5.: Eintrittslufikanal
- 6.: linker LuMeitbereich
- 7.: rechter Luftleitbereich
- 8.: innerer Luftkanal
- 9.: äußerer Luftkanal
- 10.: vorderer Bereich
- 11.: mittlerer Bereich
- 12.: hinterer Bereich
- 13.: wendelförmige Trennwand
- 14.: Luftleitklappe
- 15.: Hilfslinie
- 16.: Außenkontur
- 17.: Begrenzungskontur
- 18.: Lufiauslasselement
- A: Axialrichtung
- L: Luftströmung
- b: Breite
- d: Dicke
- h: Höhe

## Patentansprüche

1. Luftleitvorrichtung (1, 18) mit zwei Luftleitbereichen (6, 7), die jeweils zwei Luftleitkanäle (8, 9) aufweisen, die zumindest bereichsweise fluidisch voneinander getrennt sind und die zwei Luftleitkanäle (8, 9) zumindest bereichsweise im Wesentlichen koaxial zueinander ausgebildet sind,
**dadurch gekennzeichnet dass** der jeweils radial außen liegende Luftleitkanal (8, 9) zumindest bereichsweise eine nicht-runde Querschnittsform (16, 17) aufweist, wobei die nicht-runde Querschnittsform (16, 17) in einem in Luftströmungsrichtung (L) gesehen hinteren Teil (12) der Luftleitkanäle (8, 9) vorgesehen ist, wobei zumindest der radial außen liegende Luftleitkanal (9) eine ovalartige (16, 17), ellipsenartige oder stadionartige Querschnittsform aufweist, wobei in diesem Luftkanal eine wendelförmige Trennwand (13) vorgesehen ist, die sich im Wesentlichen über die gesamte Länge des Luftkanals erstreckt, zur Erzeugung eines Dralls der Luftströmung, so dass der radial äußere Luftleitkanal (9) derart ausgebildet und eingerichtet ist, dass dieser eine diffuse Luftströmung erzeugt und/oder freigibt.

2. Luftleitvorrichtung (1, 18) nach Anspruch 1, **dadurch gekennzeichnet, dass** zumindest ein Luftleitbereich (6, 7) und/oder zumindest ein Luftleitkanal (8, 9) zumindest bereichsweise eine elongierte Querschnittsform (16, 17) aufweist.

3. Luftleitvorrichtung (1, 18) nach einem der Ansprüche 1 oder 2, **gekennzeichnet durch** eine Mehrzahl von Luftleitbereichen (6, 7), insbesondere **durch** zwei (6, 7), drei oder vier Luftleitbereiche.

4. Luftleitvorrichtung (1, 18) nach einem der Ansprüche 1 bis 3, **dadurch gekennzeichnet, dass** ein radial innerer Luftleitkanal (8) derart ausgebildet und eingerichtet ist, dass dieser eine gerichtete Luftströmung erzeugt und/oder freigibt.

5. Luftleitvorrichtung (1, 18) nach einem der Ansprüche 1 bis 4, **gekennzeichnet durch** zumindest eine Luftbeeinflussungseinrichtung (14), insbesondere **durch** zumindest eine Luftdurchsatzbeeinflussungseinrichtung (14).

6. Luftleitvorrichtung (1, 18) nach einem der Ansprüche 1 bis 5, **dadurch gekennzeichnet, dass** die Luftleitvorrichtung (1, 18) zumindest eine Luftauslassvorrichtung (4) aufweist und/oder zumindest bereichsweise als Luftauslassvorrichtung (4) ausgebildet ist, insbesondere dadurch, dass die Luftleitvorrichtung zumindest eine Luftauslassdüse aufweist und/oder zumindest bereichsweise als Luftauslassdüse ausgebildet ist.

7. Luftleitvorrichtung (1, 18) nach einem der Ansprüche 1 bis 6, **dadurch gekennzeichnet, dass** die Luftleitvorrichtung (1, 18), insbesondere zumindest ein Luftleitbereich (6, 7) und/oder zumindest ein Luftleitkanal (8, 9) und/oder zumindest eine Luftauslassvorrichtung (4) und/oder zumindest eine Luftauslassdüse auf die Einbausituation (2, 3) angepasst ist.

8. Lufttechnische Einrichtung, insbesondere lufttechnische Einrichtung für ein Kraftfahrzeug, **gekennzeichnet durch** zumindest eine Luftleitvorrichtung (1, 18) nach einem der Ansprüche 1 bis 7.

9. Kraftfahrzeug, **gekennzeichnet durch** zumindest eine Luftleitvorrichtung (1, 18) nach einem der Ansprüche 1 bis 8 und/oder **durch** zumindest eine lufttechnische Einrichtung nach Anspruch 8.

## Claims

1. An air-guiding device (1, 18) having two air-guiding regions (6, 7) which each comprise two air-guiding channels (8, 9) separated from one another fluidically at least in regions and forming two air-guiding channels (8, 9) that are substantially coaxial with one another at least in regions, **characterised in that** in each case the radially outer air-guiding channel (8, 9) has a non-round cross-sectional shape (16, 17) at least in regions, wherein the non-round cross-sectional shape (16, 17) is provided in a rear part (12) of the air-guiding channels (8, 9) as considered in the airflow direction (L), wherein at least the radially outer air-guiding channel (9) has an oval-like (16, 17), elliptical or stadium-like cross-sectional shape, wherein a helical partition wall (13) is provided in this air channel and extends substantially over the entire length of the air channel in order to generate a swirl of the airflow, such that the radially outer air-guiding channel (9) is formed and designed in such a way that it generates and/or releases a diffuse airflow.

2. The air-guiding device (1, 18) according to claim 1, **characterised in that** at least one air-guiding region (6, 7) and/or at least one air-guiding channel (8, 9) has an elongate cross-sectional shape (16, 17) at least in regions.

3. The air-guiding device (1, 18) according to one of claims 1 or 2, **characterised by** a plurality of air-guiding regions (6, 7), in particular by two (6, 7), three or four air-guiding regions.

4. The air-guiding device (1, 18) according to one of claims 1 to 3, **characterised in that** a radially inner air-guiding channel (8) is formed and designed in such a way that it generates and/or releases a directed airflow.

5. The air-guiding device (1, 18) according to one of claims 1 to 4, **characterised by** at least one air-influencing arrangement (14), in particular by at least one air-flow-rate-influencing arrangement (14).

6. The air-guiding device (1, 18) according to one of claims 1 to 5, **characterised in that** the air-guiding device (1, 18) comprises at least one air outlet device (4) and/or is formed at least in regions as an air outlet device (4), in particular **characterised in that** the air-guiding device comprises at least one air outlet nozzle and/or is formed at least in regions as an air outlet nozzle.

7. The air-guiding device (1, 18) according to one of claims 1 to 6, **characterised in that** the air-guiding device (1, 18), in particular at least one air-guiding region (6, 7) and/or at least one air-guiding channel (8, 9) and/or at least one air outlet device (4) and/or at least one air outlet nozzle, is adapted to the installation situation (2, 3).

8. A ventilation arrangement, in particular a ventilation arrangement for a motor vehicle, **characterised by** at least one air-guiding device (1, 18) according to one of claims 1 to 7.

9. A motor vehicle, **characterised by** at least one air-guiding device (1, 18) according to one of claims 1 to 8 and/or by at least one ventilation arrangement according to claim 8.

## Revendications

1. Dispositif déflecteur d'air (1, 18) comprenant deux zones déflectrices d'air (6, 7) qui présentent à chaque fois deux conduits déflecteurs d'air (8, 9) qui sont séparés l'un de l'autre fluidiquement, au moins partiellement, et les deux conduits déflecteurs d'air (8, 9) sont configurés au moins partiellement, pratiquement de façon coaxiale l'un par rapport à l'autre, **caractérisé en ce que** le conduit déflecteur d'air (8, 9) se trouvant à chaque fois à l'extérieur dans le sens radial présente au moins partiellement une forme de section (16, 17) non ronde, où la forme de section (16, 17) non ronde est prévue dans une partie arrière (12) des conduits déflecteurs d'air (8, 9), ladite partie arrière étant vue suivant la direction d'écoulement de l'air (L), où au moins le conduit déflecteur d'air (9) se trouvant à l'extérieur dans le sens radial présente une section de forme ovale (16, 17), en forme d'ellipse ou en forme d'enceinte annulaire, où il est prévu, dans ce conduit d'air, une paroi de séparation (13) de forme hélicoïdale qui s'étend pratiquement sur la totalité de la longueur du conduit d'air et qui sert à la production d'un tourbillon de l'écoulement d'air, de sorte que le conduit déflecteur d'air (9) extérieur dans le sens radial est configuré et conçu de manière telle, que celui-ci produise et/ou libère un flux d'air à jet diffus.

2. Dispositif déflecteur d'air (1, 18) selon la revendication 1, **caractérisé en ce qu'**au moins une zone déflectrice d'air (6, 7) et/ou au moins un conduit déflecteur d'air (8, 9) présente au moins partiellement une section (16, 17) de forme allongée.

3. Dispositif déflecteur d'air (1, 18) selon l'une des revendications 1 ou 2, **caractérisé par** une pluralité de zones déflectrices d'air (6, 7), en particulier par deux (6, 7), trois ou quatre zones déflectrices d'air.

4. Dispositif déflecteur d'air (1, 18) selon l'une quelconque des revendications 1 à 3, **caractérisé en ce qu'**un conduit déflecteur d'air (8) intérieur dans le sens radial est configuré et conçu de manière telle, que celui-ci produise et/ou libère un flux d'air à jet dirigé.

5. Dispositif déflecteur d'air (1, 18) selon l'une quelconque des revendications 1 à 4, **caractérisé par** au moins un dispositif (14) agissant sur la circulation de l'air, en particulier par au moins un dispositif (14) agissant sur le débit d'air.

6. Dispositif déflecteur d'air (1, 18) selon l'une quelconque des revendications 1 à 5, **caractérisé en ce que** le dispositif déflecteur d'air (1, 18) présente au moins un dispositif de sortie d'air (4) et/ou est configuré au moins partiellement comme un dispositif de sortie d'air (4), en particulier **caractérisé en ce que** le dispositif déflecteur d'air présente au moins une buse de sortie d'air et/ou est configuré au moins partiellement comme une buse de sortie d'air.

7. Dispositif déflecteur d'air (1, 18) selon l'une quelconque des revendications 1 à 6, **caractérisé en ce que** le dispositif déflecteur d'air (1, 18), en particulier au moins une zone déflectrices d'air (6, 7) et/ou au moins un conduit déflecteur d'air (8, 9) et/ou au moins un dispositif de sortie d'air (4) et/ou au moins une buse de sortie d'air est adapté(e) à la situation de montage (2, 3).

8. Dispositif aéraulique, en particulier dispositif aéraulique pour un véhicule automobile, **caractérisé par** au moins un dispositif déflecteur d'air (1, 18) selon l'une quelconque des revendications 1 à 7.

9. Véhicule automobile **caractérisé par** au moins un dispositif déflecteur d'air (1, 18) selon l'une quelconque des revendications 1 à 8 et/ou par au moins un dispositif aéraulique selon la revendication 8.
